# EUROPÄISCHE PATENTSCHRIFT

(11) **EP 3 220 017 B1**
(45) Veröffentlichungstag und Bekanntmachung des Hinweises auf die Patenterteilung: **08.07.2020**
(21) Anmeldenummer: 17152987.8
(22) Anmeldetag: 25.01.2017
(51) Int. Cl.: F16J 15/16, F16J 15/3288, F01D 11/00, F01D 11/18

(54) **DICHTUNGSANORDNUNG FÜR TURBINE**
SEALING ASSEMBLY FOR TURBINE
DISPOSITIF D'ÉTANCHÉITÉ POUR TURBINE

(30) Priorität: 15.03.2016 DE 102016204213
(43) Veröffentlichungstag der Anmeldung: 20.09.2017
(73) Patentinhaber: MTU Aero Engines AG, 80995 München (DE)
(72) Erfinder: Klötzer, Alexander, 82256 Fürstenfeldbruck (DE)

(56) Entgegenhaltungen:
- EP-A1- 2 339 124
- EP-A2- 2 039 887
- US-A- 6 161 836
- US-A1- 2011 304 101
- US-A1- 2014 361 489
- US-B1- 8 210 799
- US-B1- 8 690 534

## Beschreibung

Die vorliegende Erfindung betrifft eine Dichtungsanordnung, insbesondere Bürstendichtung, für eine Turbine, insbesondere Fluggasturbine, mit einem Dichtelement und einer mit dem Dichtelement zusammenwirkenden Dichtfläche, wobei das Dichtelement und die Dichtfläche konzentrisch zueinander angeordnet sind, insbesondere konzentrisch um eine Maschinenachse der Turbine, wobei das Dichtelement und die Dichtfläche derart ausgebildet sind, dass zwischen ihnen in einem ersten Betriebszustand ein Zwischenraum gebildet ist, und dass in einem zweiten Betriebszustand ein Dichtkontakt zwischen dem Dichtelement und der Dichtfläche hergestellt ist.

EP 2 039 887 A2 betrifft eine Bürstendichtung mit einer in sämtlichen Betriebszuständen an dem Rotor anliegenden Bürste.

US 2014/361489 A1 betrifft eine Bürstendichtung für eine Welle und erlaubt eine Relativbewegung der Bürste zu der Welle, die durch einen mechanischen Aktuator verursacht wird.

US 6,161,836 A betrifft ebenfalls eine Bürstendichtung für eine Welle. Die Bürste wird in einer in axialer Richtung federvorgespannten Halterung gehalten, wobei die Federvorspannung im operativen Betriebszustand aufgrund hoher auftretender Drücke überwunden werden kann, so dass sich die Bürste an die Welle anlegt und in dem operativen Betriebszustand die Dichtung bewirkt.

EP 2 339 124 A1 betrifft eine Bürstendichtung die in einer Welle bzw. einem Rotorangeordnet ist. Die Bürstendichtung ist so in der Welle angeordnet, dass sich ein schmaler Spalt zwischen den Bürsten und der dem Gehäuse einstellt, wenn die Welle nicht rotiert. Beginnt die Welle zu rotieren, so führt eine Fliehkraftbewegung zu einer Abdichtung eines Spaltes zwischen Rotor und Gehäuse.

US 2011 / 304 101 A1 betrifft eine Blattdichtung zwischen einer Welle und einem Gehäuse, wobei die Blattdichtung aufgrund eines Druckaufbaus während der Rotation gegen die Welle gedrückt wird.

US 8 690 534 B1 betrifft eine Dichtungsanordnung mit einem Dichtelement und einer mit dem Dichtelement zusammenwirkenden Dichtfläche, wobei das Dichtelement und die Dichtfläche konzentrisch um eine Maschinenachse angeordnet sind und relativ zueinander um die Maschinenachse drehbar sind, wobei das Dichtelement und die Dichtfläche derart ausgebildet sind, dass zwischen ihnen in einem ersten Betriebszustand ein Zwischenraum gebildet ist, und dass in einem zweiten Betriebszustand ein Dichtkontakt zwischen dem Dichtelement und der Dichtfläche hergestellt ist.

Bisher bekannte Bürstendichtungen für Turbinen bzw. Turbomaschinen haben üblicherweise radial angeordnete Borsten und eine horizontale (achsparallele), zylindrische Lauffläche (Dichtfläche) an einem Rotor. Dies ermöglicht den Ausgleich axialer Bewegungen zueinander und den Ausgleich von kleinen radialen Bewegungen. Ferner sind Bürstendichtungen bekannt, bei denen der Bürsteninnendurchmesser vor der Montage kleiner als der Außendurchmesser der Dichtfläche ist. Hierdurch ergibt sich in einem montierten Zustand der Bürstendichtung eine Vorspannung der Borsten, d.h. die Borsten werden auf wenigstens, einem Teil ihrer radialen Länge gebogen bzw. gekrümmt aufgrund von wirkenden Drucckräften. Dies hat den Nachteil, dass der mögliche Ausgleich von radialen Bewegungen des Rotors geringer ist. Ferner ergibt sich aufgrund der vorgespannten Borsten eine Vorzugsdrehrichtung des Rotors (Betriebsdrehrichtung), d.h. die vorgespannten Borsten sind in Umfangsrichtung in Betriebsdrehrichtung gebogen bzw. geneigt. Eine Drehung des Rotors in die zur Betriebsdrehrichtung entgegengesetzte Richtung ist nicht zulässig bzw. unmöglich, weil die in Betriebsdrehrichtung schräggestellten Borsten der Dichtung eine Sperrwirkung ausüben. Wird der Rotor trotzdem gegen die Betriebsdrehrichtung bewegt, kann es zur Beschädigung der Dichtung kommen, insbesondere können Teile der Bürstendichtung geknickt werden, so dass zwischen den Borsten unerwünschte Zwischenräume gebildet werden und die Dichtwirkung verloren geht.

Aufgabe der Erfindung ist es, eine Dichtungsanordnung bereitzustellen, welche die genannten Nachteile vermeidet.

Erfindungsgemäß wird zur Lösung dieser Aufgabe vorgeschlagen, dass der Dichtkontakt durch thermische Dehnung an der Dichtfläche oder/und am Dichtelement hergestellt ist. Der zweite Betriebszustand stellt einen laufenden Zustand der Turbine dar. Im laufenden Betrieb einer Turbine entstehen Heißgase, die zu einer hohen Betriebstemperatur der Turbine und der Dichtungsanordnung führen. Diese hohen Temperaturen führen zu thermischen Ausdehnungen von Bauteilen, insbesondere auch von Komponenten der Dichtungsanordnung, so dass die thermische Ausdehnung dazu genutzt werden kann, den Zwischenraum zwischen Dichtelement und Dichtfläche zu schließen und den gewünschten Dichtkontakt zuverlässige herstellen zu können.

Durch den im ersten Betriebszustand zwischen dem Dichtelement (Bürstendichtung) und der Dichtfläche bzw. Anlagefläche gebildeten Zwischenraum ist es im ersten Betriebszustand möglich, das Dichtelement und die Dichtfläche in beliebiger Drehrichtung relativ zueinander zu verdrehen, ohne dass hierdurch die Gefahr einer nachteiligen Einwirkung auf das Dichtelement besteht. Der erste Betriebszustand kann vorzugsweise ein Stillstand der Turbine sein. Dabei kann in diesem ersten Betriebszustand die Gastrubine bzw. die Dichtungsanordnung eine Temperatur aufweisen, die im Wesentlichen einer Umgebungstemperatur entspricht. Der zweite Betriebszustand ist vorzugsweise ein laufender Zustand der Turbine, in dem die Turbine bzw. die Dichtungsanordnung eine Betriebstemperatur aufweisen, die mehrere hundert Grad Celsius beträgt.

Weiterbildend wird vorgeschlagen, dass die Dichtfläche bezogen auf einen axialen Längsschnitt geneigt oder gebogen zur Axialrichtung und zur Radialrichtung ausgeführt ist. Anders ausgedrückt weist die Dichtfläche bevorzugt eine konische Form auf, d.h. ihr Radius nimmt in axialer Richtung zu bzw. ab. Durch die geneigt oder gebogene Ausgestaltung wird das Wechselspeil zwischen Herstellen eines Dichtkontakts und Bereitstellen des Zwischenraums zwischen Dichtelement und Dichtfläche vereinfacht.

Es ist bevorzugt, dass das Dichtelement einen der Dichtfläche gegenüberliegenden Kontaktabschnitt aufweist, wobei der Kontaktabschnitt bezogen auf einen axialen Längsschnitt geneigt oder gebogen zur Axialrichtung und zur Radialrichtung ausgeführt ist. Dabei kann der geneigte oder gebogene Kontaktabschnitt durch Enden von unterschiedlich langen Borsten einer Bürstendichtung gebildet sein. Die Neigung oder Biegung des Kontaktabschnitts kann auch etwa gleich sein wie die Neigung bzw. Biegung der Dichtfläche. Besonders bevorzugt weisen die Dichtfläche und der Kontaktabschnitt Neigungen derart auf, dass im zweiten Betriebszustand ein Druck auf das gesamte Dichtelement, insbesondere auf möglichst alle Borsten der Bürstendichtung ausgeübt wird, um eine optimale Dichtwirkung zu erzielen.

Das Dichtelement kann einem Stator der Turbine zugeordnet sein, und die Dichtfläche kann einem Rotor der Turbine zugeordnet sein. Alternativ ist es auch möglich, dass das Dichtelement einem Rotor der Turbine zugeordnet ist und dass die Dichtfläche einem Stator der Turbine zugeordnet ist. Die oben beschriebenen Neigungen der Dichtfläche bzw. des Kontaktabschnitts des Dichtelements können je nachdem, ob sie statorseitig oder rotorseitig vorgesehen sind, unterschiedlich ausgeführt sein. Insbesondere bei einer rotorseitigen Anordnung des Dichtelements ist es denkbar, dass der Kontaktabschnitt geneigt ist, während die statorseitige Dichtfläche im Wesentlichen parallel zur Maschinenachse ausgerichtet ist.

Bevorzugt kann das Dichtelement durch Borsten einer Bürstendichtung gebildet sein. Dabei können sich die Borsten im ersten Betriebszustand in im Wesentlichen radialer Richtung zur Dichtfläche hin erstrecken. Im ersten Betriebszustand bildet der Kontaktabschnitt des Dichtelements somit ein freies Ende, das nicht in Kontakt mit der Dichtfläche steht, sondern in radialer Richtung eine Begrenzung des Zwischenraums bildet.

Der Dichtkontakt zwischen dem Dichtelement und der Dichtfläche ist im zweiten Betriebszustand vorzugsweise auch durch axial und radial wirkende Kräfte hergestellt.

Die Erfindung betrifft ferner auch eine Turbine, insbesondere Fluggasturbine, mit wenigstens einem Rotor und wenigstens einem Stator, wobei zur Abdichtung zwischen dem Rotor und dem Stator eine Dichtungsanordnung mit wenigstens einem der oben beschriebenen Merkmale vorgesehen ist.

Nachfolgend wird die Erfindung unter Bezugnahme auf die anliegenden Figuren beispielhaft und nicht einschränkend beschrieben. Richtungsangaben wie "Axial-" bzw. "axial", "Radial- " bzw. "radial" und "Umfangs-" sind dabei grundsätzlich auf die Maschinenachse der Turbine bezogen zu verstehen, sofern sich aus dem Kontext nicht explizit oder implizit etwas anderes ergibt.
Fig. 1 zeigt in den Teilfiguren A) und B) schematisch und vereinfacht eine Längsschnittdarstellung einer ersten Ausführungsform einer Dichtungsanordnung.
Fig. 2 zeigt schematisch und vereinfacht eine Längsschnittdarstellung einer zweiten Ausführungsform einer Dichtungsanordnung.

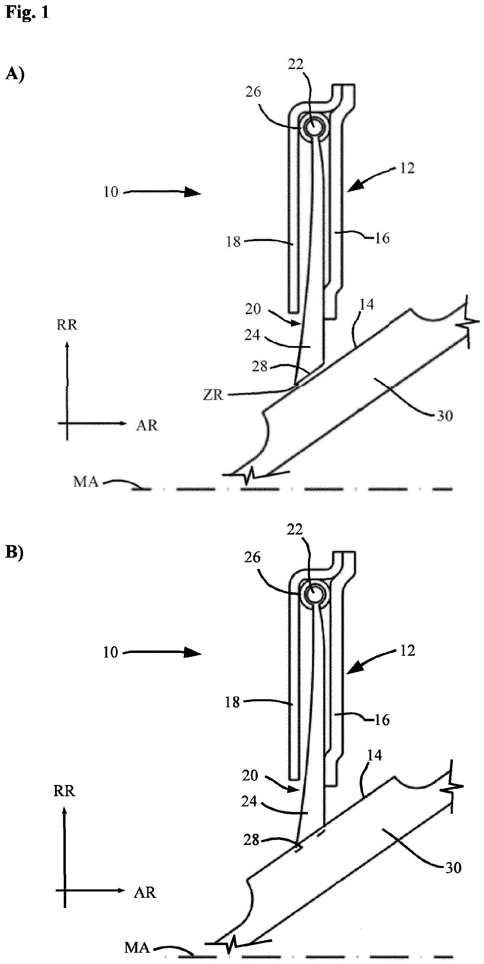

In Fig. 1 ist eine erste Ausführungsform einer Dichtungsanordnung 10 in einem Längsschnittdargestellt, wobei die Schnittebene durch die axiale Richtung AR und die radiale Richtung RR aufgespannt ist. Ebenfalls ersichtlich und rein schematisch dargestellt ist eine sich in axialer Richtung AR erstreckende Maschinenachse MA.

Die Dichtungsanordnung 10 umfasst eine Bürstendichtung 12 und eine Dichtfläche 14. Die Bürstendichtung 12 weist einen Stützring 16, einen Deckring 18 und ein Dichtelement 20 auf. Das Dichtelement 20 umfasst einen Kerndraht 22, ein Draht- oder Faserpaket 24 und ein Klemmelement 26. Radial innen weist das Dichtelement 20 einen Kontaktabschnitt 28 auf, der bezogen auf die radiale Richtung gegenüber der Dichtfläche 14 angeordnet ist. Der Kontaktabschnitt 28 wird insbesondere durch die freien Enden der Drähte bzw. Fasern des Draht- bzw. Faserpakets 24 gebildet.

In der Ausführungsform der Fig. 1 ist die Dichtfläche 14 einem drehenden Bauteil, also einem Rotor 30 einer nicht weiter dargestellten Turbine zugeordnet. Das Dichtelement 20 ist einem unbewegten Bauteil, also einem Stator zugeordnet. Entsprechend dreht sich die Anlagefläche 14 bzw. der Rotor 30 relativ zum Dichtelement 20 um die Maschinenachse MA.

Die Dichtungsanordnung 10 ist so ausgebildet, dass in einem ersten Betriebszustand, der in Fig. 1A) dargestellt ist, zwischen dem Dichtelement 20, insbesondere dessen Kotaktabschnitt 28 und der Dichtfläche 14 ein Zwischen ZR gebildet ist. Das heißt, dass in diesem ersten Betriebszustand das Draht- bzw. Faserpaket 24 nicht in Kontakt steht mit der Dichtfläche 14. Der Kontaktabschnitt 28 bildet somit ein in radialer Richtung RR freies Ende des Dichtelements 20 bzw. des Drahtpakets 24. Der erste Betriebszustand ist dabei vorzugsweise ein Stillstand der Turbine. Die in diesem ersten Betriebszustand herrschende Temperatur in der Turbine bzw. im Bereich der Dichtungsanordnung 10 ist unterhalb einer Betriebstemperatur der Turbine, vorzugsweise unterhalb von 100°C., insbesondere Umgebungslufttemperatur bzw. Raumtemperatur. Der erste Betriebszustand kann auch als kalter Zustand bezeichnet werden. In diesem Zustand ist es aufgrund des Zwischenraums ZR möglich, dass sich der Rotor 30 relativ zum Dichtelement 20 frei bewegen kann, ohne dass er durch das Draht- bzw. Faserpaket 24 daran gehindert wird. Hierdurch können auch negative Beeinträchtigungen auf das Draht- bzw. Faserpaket 24 vermieden werden.

In Fig. 1B) ist die Dichtungsanordnung 10 in einem zweiten Betriebszustand der Turbine dargestellt. In diesem zweiten Betriebszustand liegt das Dichtelement 20 mit seinem Kontaktabschnitt 28 an der Dichtfläche 14 an. Zwischen dem Dichtelement 20 und der Dichtfläche 14 ist als ein Kontakt bzw. eine Berührung vorhanden. Das Draht- bzw. Faserpaket 24 wird dabei insbesondere im Kontaktbereich 28 abgelenkt bzw. gebogen aufgrund der wirkenden radialen Druckkräfte zwischen Dichtfläche 14 und Kontaktabschnitt 28. In diesem zweiten Betriebszustand ist die Abdichtung zwischen Rotor 30 und Stator mittels der Dichtungsanordnung 10 hergestellt. Der zweite Betriebszustand ist insbesondere ein Zustand, in dem die Turbine läuft, also der Rotor 30 sich um die Maschinenachse dreht. Ferner ist die in der Turbine, insbesondere im Bereich der Dichtungsanordnung 10 herrschende Temperatur eine Betriebstemperatur, die mehrere hundert Grad C° beträgt. Der zweite Betriebszustand kann auch als heißer Betriebszustand bezeichnet werden. Der zwischen dem ersten (kalten) Betriebszustand und dem zweiten (heißen) Betriebszustand herrschende Temperaturunterschied, ggf. auch im Zusammenwirken mit mechanischen Relativbewegungen von Bauteilen zueinander, ermöglicht es, dass der im kalten Betriebszustand vorhandene Zwischenraum ZR (Fig. 1A) aufgrund thermischer Ausdehnung und ggf. mechanischer Relativbewegung von Stator zu Rotor in dem heißen Betriebszustand geschlossen wird, so dass zwischen Dichtelement 20 und Dichtfläche 14 ein Dichtkontakt hergestellt ist (Fig. 1B). Das Herstellen bzw. Beibehalten des Dichtkontakts im zweiten Betriebszustand kann ferner auch durch die in der Turbine herrschenden Druckverhältnisse oder Strömungsverhältnisse beeinflusst sein.

Die Dichtfläche 14 ist in der Fig. 1 geneigt zur Axialrichtung AR und zur Radialrichtung RR ausgeführt. Die geneigte Ausgestaltung der Dichtfläche erleichtert das Herstellen des Dichtkontakts mit dem Dichtelement 20 bei thermischer Ausdehnung im zweiten Betriebszustand. Damit der Kontaktabschnitt 28 mit den freien Enden der Borsten bzw. Fasern des Draht- bzw. Faserpakets 24 optimal an der Dichtfläche 14 anliegen kann, weist der Kontaktabschnitt 28 an seinem freien Ende ebenfalls eine Neigung auf, die im Wesentlichen der Neigung der Dichtfläche 14 entspricht. Alternativ zu einer geneigten Ausgestaltung können die Dichtfläche 14 und der Kontaktabschnitt 28 auch gebogen bzw. gekrümmt ausgestaltet sein. Anderes ausgedrückt, weist die Dichtfläche 14 einen in axialer Richtung AR von links nach rechts zunehmenden Radius aus. Das Dichtelement 20 weist ausgehend vom Klemmelement 26 unterschiedlich lange Borsten bzw. Fasern auf, so dass der geneigte bzw. schräge Kontaktabschnitt 28 ausgebildet ist.

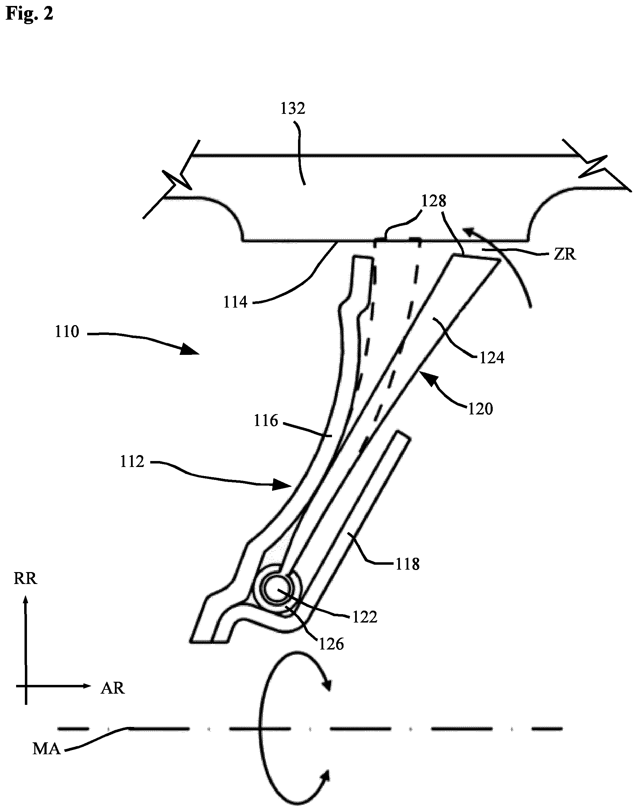

Fig. 2 zeigt eine zweite Ausführungsform einer Dichtungsanordnung 110 in einem Längsschnittdargestellt, wobei die Schnittebene durch die axiale Richtung AR und die radiale Richtung RR aufgespannt ist. Ebenfalls ersichtlich und rein schematisch dargestellt ist eine sich in axialer Richtung AR erstreckende Maschinenachse MA.

Die Dichtungsanordnung 110 umfasst eine Bürstendichtung 112 und eine Dichtfläche 114. Die Bürstendichtung 112 weist einen Stützring 116, einen Deckring 118 und ein Dichtelement 120 auf. Das Dichtelement 120 umfasst einen Kerndraht 122, ein Draht- oder Faserpaket 124 und ein Klemmelement 126. Radial außen weist das Dichtelement 120 einen Kontaktabschnitt 128 auf, der bezogen auf die radiale Richtung RR gegenüber der Dichtfläche 114 angeordnet ist. Der Kontaktabschnitt 128 wird insbesondere durch die freien Enden der Drähte bzw. Fasern des Draht- bzw. Faserpakets 124 gebildet.

In der Ausführungsform der Fig. 2 ist die Dichtfläche 114 einem unbewegten Bauteil, also einem Stator 132 einer nicht weiter dargestellten Turbine zugeordnet. Das Dichtelement 20 ist einem drehenden Bauteil, also einem Rotor zugeordnet. Entsprechend dreht sich das Dichtelement 120 relativ zur Dichtfläche 114 um die Maschinenachse MA.

Das mit durchgezogener Linie dargestellte Dichtelement 120 zeigt die Dichtungsanordnung 110 in dem ersten (kalten) Betriebszustand. Die gestrichelte Darstellung des Dichtelements 120 illustriert den zweiten (heißen) Betriebszustand. Das oben in Bezug auf die Figuren 1A und 1B Gesagte zu den beiden Betriebszuständen gilt auch für die zweite Ausführungsform gemäß Fig. 2 analog.

Im ersten Betriebszustand ist zwischen dem Kontaktabschnitt 128 und der Dichtfläche 114 ein Zwischenraum ZR gebildet. Im zweiten Betriebszustand (gestrichelte Linie) stehen das Dichtelement 120 und die Dichtfläche in Dichtkontakt miteinander. Beim Übergang von ersten zum zweiten Betriebszustand unterliegt das Dichtelement 120 einer Bewegung zum Stützring 116 hin, was durch den gebogenen Pfeil illustriert ist. Diese Bewegung zum Stützring 116 hin erfolgt insbesondere aufgrund der wirkenden Fliehkräfte beim Drehen der Bürstendichtung 112 um die Maschinenachse. Das Herstellen des Dichtkontakts zwischen Dichtelement 120 und Dichtfläche 114 erfolgt in dieser Ausführungsform also insbesondere durch eine mechanische Relativbewegung zwischen Dichtelement 120 und Dichtfläche 114, wobei ggf. auch eine thermische Ausdehnung des Dichtelements 120 bzw. der gesamten Bürstendichtung 112 in radialer Richtung einen Einfluss haben kann.

Der Kontaktabschnitt 128 ist so ausgeführt, dass er im ersten Betriebszustand geneigt zur Maschinenachse MA bzw. zur Dichtfläche 114 ist. Die Neigung ist insbesondere so gewählt, dass der Kontaktabschnitt 128 im zweiten Betriebszustand im Wesentlichen parallel zur Dichtfläche 114 ausgerichtet ist, um eine maximale Anlage an der Dichtfläche 114 und somit eine optimale Dichtwirkung zu ermöglichen.

In der Zusammenschau der beiden Ausführungsformen der Figuren 1 und 2 ist die Dichtungsanordnung 10 bzw. 110 also jeweils so ausgebildet, dass in dem ersten Betriebszustand ein Zwischenraum zwischen Dichtelement 20, 120 und Dichtfläche 14, 114 gebildet ist, wobei dieser Zwischenraum ZR in dem zweiten Betriebszustand nicht mehr vorliegt und das Dichtelement 20, 120 in Kontakt mit der Dichtfläche 14, 114 steht.

Die in den Figuren 1 und 2 dargestellten Ausgestaltungen des Dichtelements und der Dichtfläche, insbesondere deren Neigungen relativ zur Maschinenachse oder relativ zueinander können entsprechend den konstruktiven Begebenheiten in einer Turbine gewählt werden. Die dargestellten Neigungen der Dichtfläche und des Kontaktabschnitts sind beispielhaft und können auch stärker oder weniger stark geneigt sein. Es ich auch möglich, dass die geneigte Dichtfläche bzw. der geneigte Kontaktabschnitt gebogen bzw. gekrümmt ausgebildet sind.

Insgesamt wird durch die vorgestellte Dichtungsanordnung erreicht, dass das Draht- bzw. Faserpaket der Bürstendichtung im Ruhezustand (1. Betriebszustand) der Turbine nicht an der Dichtfläche anliegt. Somit sind in diesem Ruhezustand die Bürstendichtung und die Dichtfläche relativ zueinander beweglich. Dies vereinfacht die Montage und die Wartung einer solchen Dichtungsanordnung. Ferner wird die Gefahr einer Beschädigung der Bürstendichtung, insbesondere des Draht- bzw. Faserpakets verringert bzw. vermieden. Aufgrund der Ausgestaltung kann im zweiten Betriebszustand trotzdem eine sehr gute Dichtwirkung erreicht werden, weil die in der Turbine im Betrieb sowieso vorkommende thermische Ausdehnung oder/und mechanische Relativbewegung von Bauteilen zueinander ausgenutzt wird, um den Dichtkontakt zuverlässig herzustellen.

### Bezugszeichenliste

- 10, 110: Dichtungsanordnung
- 12, 112: Bürstendichtung
- 14, 114: Dichtfläche
- 16, 116: Stützring
- 18, 118: Deckring
- 20, 120: Dichtelement
- 22, 122: Kerndraht
- 24, 124: Drahtpaket, Faserpaket
- 26, 126: Klemmelement
- 28, 128: Kontaktabschnitt
- 30: Rotor
- 132: Stator
- AR: axiale Richtung
- MA: Maschinenachse
- RR: radiale Richtung
- ZR: Zwischenraum

## Patentansprüche

1. Bürstendichtung für eine Turbine, insbesondere Fluggasturbine, mit einem Dichtelement (20; 120) und einer mit dem Dichtelement (20; 120) zusammenwirkenden Dichtfläche (14; 114), wobei das Dichtelement (20; 120) und die Dichtfläche (14; 114) konzentrisch um eine Maschinenachse (MA) der Turbine angeordnet sind und relativ zueinander um die Maschinenachse (MA) drehbar sind, wobei das Dichtelement (20; 120) und die Dichtfläche (14;114) derart ausgebildet sind, dass zwischen ihnen in einem ersten Betriebszustand ein Zwischenraum (ZR) gebildet ist, und dass in einem zweiten Betriebszustand ein Dichtkontakt zwischen dem Dichtelement (20;120) und der Dichtfläche (14; 114) hergestellt ist, **dadurch gekennzeichnet, dass** der Dichtkontakt zwischen dem Dichtelement (20; 120) und der Dichtfläche (14; 114) im zweiten Betriebszustand, in dem das Dichtelement (20; 120) und die Dichtfläche (14;114) einer Betriebstemperatur der Turbine von mehreren hundert Grad Celsius unterliegen, durch thermische Dehnung an der Dichtfläche oder/und am Dichtelement hergestellt ist.

2. Bürstendichtung nach Anspruch 1, **dadurch gekennzeichnet, dass** die Dichtfläche (14; 114) bezogen auf einen axialen Längsschnitt geneigt oder gebogen zur Axialrichtung (AR) und zur Radialrichtung (RR) ausgeführt ist.

3. Bürstendichtung nach Anspruch 1 oder 2, **dadurch gekennzeichnet, dass** das Dichtelement (20; 120) einen der Dichtfläche (14; 114) gegenüberliegenden Kontaktabschnitt (28; 128) aufweist, wobei der Kontaktabschnitt (28; 128) bezogen auf einen axialen Längsschnitt geneigt oder gebogen zur Axialrichtung (AR) und zur Radialrichtung (RR) ausgeführt ist.

4. Bürstendichtung nach Anspruch 3, **dadurch gekennzeichnet, dass** der geneigte oder gebogene Kontaktabschnitt (28; 128) durch Enden von unterschiedlich langen Borsten (24; 124) einer Bürstendichtung (12; 112) gebildet ist.

5. Bürstendichtung nach einem der vorhergehenden Ansprüche, **dadurch gekennzeichnet, dass** das Dichtelement (20) einem Stator der Turbine zugeordnet ist und dass die Dichtfläche (14) einem Rotor der Turbine zugeordnet ist.

6. Bürstendichtung nach einem der Ansprüche 1 bis 4, **dadurch gekennzeichnet, dass** das Dichtelement (120) einem Rotor der Turbine zugeordnet ist und dass die Dichtfläche (114) einem Stator der Turbine zugeordnet ist.

7. Bürstendichtung nach einem der vorhergehenden Ansprüche, **dadurch gekennzeichnet, dass** das Dichtelement (20; 120) durch Borsten (24; 124) einer Bürstendichtung (12; 112) gebildet ist.

8. Bürstendichtung nach Anspruch 7, **dadurch gekennzeichnet, dass** sich die Borsten (24) im ersten Betriebszustand in im Wesentlichen radialer Richtung (RR) zur Dichtfläche (14) hin erstrecken.

9. Bürstendichtung nach einem der vorhergehenden Ansprüche, **dadurch gekennzeichnet, dass** der Dichtkontakt zwischen dem Dichtelement (20; 120) und der Dichtfläche (14; 114) im zweiten Betriebszustand durch axial und radial wirkende Kräfte hergestellt ist.

10. Turbine, insbesondere Fluggasturbine, mit wenigstens einem Rotor (30) und wenigstens einem Stator (132), wobei zur Abdichtung zwischen dem Rotor und dem Stator eine Bürstensichtung (10; 110) nach einem der vorhergehenden Ansprüche vorgesehen ist.

## Claims

1. Brush seal for a turbine, in particular an aircraft gas turbine, comprising a sealing element (20; 120) and a sealing surface (14; 114) which interacts with the sealing element (20; 120), the sealing element (20; 120) and the sealing surface (14; 114) being arranged concentrically around a machine axis (MA) of the turbine and being rotatable relative to one another about the machine axis (MA), the sealing element (20; 120) and the sealing surface (14; 114) being designed such that an intermediate space (ZR) is formed between them in a first operating state, and such that a sealing contact is produced between the sealing element (20; 120) and the sealing surface (14; 114) in a second operating state, **characterized in that** the sealing contact between the sealing element (20; 120) and the sealing surface (14; 114) in the second operating state, in which the sealing element (20; 120) and the sealing surface (14; 114) are subjectto an operating temperature of the turbine of several hundred degrees Celsius, is produced by means of thermal expansion on the sealing surface and/or on the sealing element.

2. Brush seal according to claim 1, **characterized in that** the sealing surface (14; 114) is designed, with respect to an axial longitudinal section, so as to be inclined or bent with respect to the axial direction (AR) and the radial direction (RR).

3. Brush seal according to either claim 1 or claim 2, **characterized in that** the seal ing element (20; 120) has a contact portion (28; 128) opposite the sealing surface (14; 114), the contact portion (28; 128) being designed, with respect to an axial longitudinal section, so as to be inclined or bent with respect to the axial direction (AR) and the radial direction (RR).

4. Brush seal according to claim 3, **characterized in that** the inclined or bent contact portion (28; 128) is formed by ends of bristles (24; 124) of a brush seal (12; 112), which bristles vary in length.

5. Brush seal according to any of the preceding claims, **characterized in that** the sealing element (20) is associated with a stator of the turbine and **in that** the sealing surface (14) is associated with a rotor of the turbine.

6. Brush seal according to any of claims 1 to 4, **characterized in that** the sealing element (120) is associated with a rotor of the turbine and **in that** the sealing surface (114) is associated with a stator of the turbine.

7. Brush seal according to any of the preceding claims, **characterized in that** the sealing element (20; 120) is formed by bristles (24; 124) of a brush seal (12; 112).

8. Brush seal according to claim 7, **characterized in that** the bristles (24) extend substantially in the radial direction (RR) with respect to the sealing surface (14) in the first operating state.

9. Brush seal according to any of the preceding claims, **characterized in that** the sealing contact between the sealing element (20; 120) and the sealing surface (14; 114) in the second operating state is produced by means of axially and radially acting forces.

10. Turbine, in particular an aircraft gas turbine, comprising at least one rotor (30) and at least one stator (132), with a brush seal (10; 110) according to any of the preceding claims being provided for sealing between the rotor and the stator.

## Revendications

1. Dispositif d'étanchéité à brosse pour une turbine, en particulier pour une turbine à gaz d'avion, comportant un élément d'étanchéité (20 ; 120) et une surface d'étanchéité (14 ; 114) coopérant avec l'élément d'étanchéité (20 ; 120), l'élément d'étanchéité (20 ; 120) et la surface d'étanchéité (14 ; 114) étant disposés de manière concentrique autour d'un axe de moteur (MA) de la turbine et pouvant tourner l'un par rapport à l'autre autour de l'axe de moteur (MA), l'élément d'étanchéité (20 ; 120) et la surface d'étanchéité (14 ; 114) étant conçus de telle manière que, dans un premierétat de fonctionnement, un espace intermédiaire (ZR) est formé entre eux et que, dans un second état de fonctionnement, un contact d'étanchéité est établi entre l'élément d'étanchéité (20 ; 120) et la surface d'étanchéité (14 ; 114), **caractérisé en ce que** le contact d'étanchéité entre l'élément d'étanchéité (20 ; 120) et la surface d'étanchéité (14 ; 114) est établi par dilatation thermique au niveau de la surface d'étanchéité et/ou de l'élément d'étanchéité, dans le second état de fonctionnement dans lequel l'élément d'étanchéité (20 ; 120) et la surface d'étanchéité (14 ; 114) sont soumis à une température de fonctionnement de la turbine de plusieurs centaines de degrés Celsius.

2. Dispositif d'étanchéité à brosse selon la revendication 1, **caractérisé en ce que** la surface d'étanchéité (14 ; 114) est inclinée ou incurvée par rapport à une section longitudinale axiale, par rapport à la direction axiale (AR) et à la direction radiale (RR).

3. Dispositif d'étanchéité à brosse selon la revendication 1 ou 2, **caractérisé en ce que** l'élément d'étanchéité (20 ; 120) comporte une section de contact (28 ; 128) opposée à la surface d'étanchéité (14 ; 114), la section de contact (28 ; 128) étant inclinée ou incurvée par rapport à une section longitudinale axiale, par rapport à la direction axiale (AR) et à la direction radiale (RR).

4. Dispositif d'étanchéité à brosse selon la revendication 3, **caractérisé en ce que** la section de contact (28 ; 128) inclinée ou incurvée est formée par les extrémités de poils (24 ; 124) de différentes longueurs d'un dispositif d'étanchéité à brosse (12 ; 112).

5. Dispositif d'étanchéité à brosse selon l'une des revendications précédentes, **caractérisé en ce que** l'élément d'étanchéité (20) est associé à un stator de la turbine, et **en ce que** la surface d'étanchéité (14) est associée à un rotorde la turbine.

6. Dispositif d'étanchéité à brosse selon l'une des revendications 1 à 4, **caractérisé en ce que** l'élément d'étanchéité (120) est associé à un rotor de la turbine, et **en ce que** la surface d'étanchéité (114) est associée à un stator de la turbine.

7. Dispositif d'étanchéité à brosse selon l'une des revendications précédentes, **caractérisé en ce que** l'élément d'étanchéité (20 ; 120) est formé par les poils (24 ; 124) d'un dispositif d'étanchéité à brosse (12 ; 112).

8. Dispositif d'étanchéité à brosse selon la revendication 7, **caractérisé en ce que**, dans le premier état de fonctionnement, les poils (24) s'étendent dans une direction sensiblement radiale (RR) vers la surface d'étanchéité (14).

9. Dispositif d'étanchéité à brosse selon l'une des revendications précédentes, **caractérisé en ce que** le contact d'étanchéité entre l'élément d'étanchéité (20 ; 120) et la surface d'étanchéité (14 ; 114) est établi dans le second état de fonctionnement pardes forces agissant axialement et radialement.

10. Turbine, en particulier turbine à gaz d'avion, comportant au moins un rotor (30) et au moins un stator (132), un dispositif d'étanchéité à brosse (10 ; 110) selon l'une des revendications précédentes étant prévu pourassurer l'étanchéité entre le rotor et le stator.
